# EUROPEAN PATENT APPLICATION

(11) **EP 1 061 687 A1**
(43) Date of publication of application: **20.12.2000**
(21) Application number: 00401206.8
(22) Date of filing: 02.05.2000
(51) Int. Cl.: H04L 1/00, H04L 27/26

(54) **Adaptation of guard interval lengths in an OFDM communication system**

(30) Priority: 14.06.1999 FR 9907501
(71) Applicant: CANON KABUSHIKI KAISHA, Tokyo (JP)
(72) Inventor: Ehrmann, Frédérique, 35700 Rennes (FR); Le Scolan, Lionel, 35000 Rennes (FR); Rousselin, Samuel, 35000 Rennes (FR); Thoumy, Francois, 35250 Chevaigne (FR); Le Bars, Philippe, 35410 Nouvoitou (FR)
(74) Representative: Rinuy, Santarelli

(57) **Abstract**

These transmission and reception methods and devices make it possible to automatically adjust (64) the value of the guard time to be complied with between two successive blocks of data to be transmitted, according to the quality of reception of the data, by virtue of a marking signal, inserted (22) in the data, the marking signal, determined on reception, representing the value of the guard time to be complied with on transmission.

They apply to the transmission of OFDM symbols.

## Description

The present invention relates to a transmission method and device, to a reception method and device, and to systems using them.

An information transmission system transmits in general symbols (each symbol being for example a sequence of binary data) in series over a transmission channel, thus occupying a frequency band which must necessarily be larger than the inverse of the duration of a symbol.

When the symbol transmission rate becomes too high, it is impossible to guarantee that the transmission channel will have identical amplitude and phase characteristics over the entire space of the frequencies making up the passband. These distortions in the channel give rise to interference between symbols, which can be combatted by means of an equaliser. However, such a system is relatively complex.

One technique for remedying this problem consists of distributing the signal to be transmitted over a large number of carriers in parallel, individually modulated at low rate. The rate being low, the passband necessary for each carrier is smaller, and therefore it is more probable that the amplitude and phase characteristics will be identical for all the frequencies making up this band. This technique is known to persons skilled in the art as Orthogonal Frequency Division Multiplexing or OFDM. The spectra of the signals modulating the carriers overlap in such a manner that they satisfy the condition of orthogonality which enables to eliminate the interference between modulated sub-carriers and to obtain a much greater spectral efficiency.

The spacing between two adjacent sub-carriers corresponds to the inverse of the duration of a symbol.

The OFDM modulation is generally assimilated to a Fourier transform, so that, in order to implement it, FFT (Fast Fourier Transform) algorithms are used.

The main steps performed during the transmission of a message using an OFDM modulation are stated below.

First of all the binary data of the message to be transmitted are grouped in blocks of data. Each of these blocks will be transmitted independently and will constitute, after base-band modulation, an OFDM signal.

Each of the blocks of data also group together the binary elements by subset, each subset then undergoing a bijective mapping over a discrete set of points in the Fresnel space, each of these points representing a possible phase and amplitude. Thus, for example, if a message consisting of the following series of bits: {00001110010001111000...} is considered, it is possible to extract therefrom a block of 16 bits 0000111001000111, with which there is associated, by mapping, the following set of points on the complex plane: 1+j, 1+j, -1-j, 1-j, -1+j, 1+j, -1+j, -1-j. This therefore gives a set of eight complex elements, defining a vector V.

An inverse discrete fast Fourier transformation having a matrix A is then applied to the vectors V thus obtained from the original message, which supplies an OFDM signal, consisting of a series of complex amplitudes.

Each transmitted symbol is received, after passing through the transmission channel, by a demodulator, from which there is extracted a vector V' containing complex elements by multiplying the amplitudes constituting the symbol by a direct discrete Fourier transform matrix A', such that A.A' = I, where I designates the identity matrix.

The application of a decision criterion based on the maximum likelihood on the real part and on the imaginary part of each vector V' enables to retrieve the initial sequence of symbols, and then to restore the associated binary elements.

The different symbols of each block are connected together because of the linear combination obtained by multiplying the elements of a vector V to be transmitted by the inverse discrete Fourier transform matrix A. This linear combination guarantees a certain degree of robustness and protects the symbols against interference between complex symbols within one and the same OFDM symbol.

On the other hand, this protection effect does not extend from one OFDM symbol (that is to say from one block of complex symbols) to another.

In order to prevent interference between blocks, it is known that a technique can be used which consists of providing a period of silence or non-transmission, also referred to as guard time, between two consecutive symbols.

However, in the prior art, the value of the guard time preceding the current symbol is determined pragmatically, in the light of an evaluation, by the expert, of the period necessary for an attenuation of the echo resulting from the transmission of the previous OFDM symbol.

This evaluation is generally based on certain propagation models. However, these propagation models cannot exhaustively envisage all possible situations. In particular, the propagation can vary greatly in the case of mobile stations in a telecommunication network. Thus, if the choice is not suited, there is risk either of losing binary transmission rate, when the guard time is too long compared with the period necessary for fading of the echo of the previous symbol, or of having a binary transmission rate which is high but affected by error, when the guard time is too short, since the echo is then superimposed at the start of the following symbol.

The aim of the present invention is to remedy the aforementioned drawbacks by affording, not a pragmatic determination, but an automatic adjustment of the guard time, the value of this guard time also being liable to vary adaptively over time as a function of the successive symbols transmitted and their echo, so as to achieve an optimum compromise between the binary transmission rate and the error rate.

Moreover, in order to improve the reliability of the transmission system, it is chosen to add to the OFDM modulation a coding using turbocodes. This type of coding has in fact, compared with the usual conventional coding methods, the following advantage: the number of uncorrected errors decreases very rapidly for a slight increase in the signal to noise ratio.

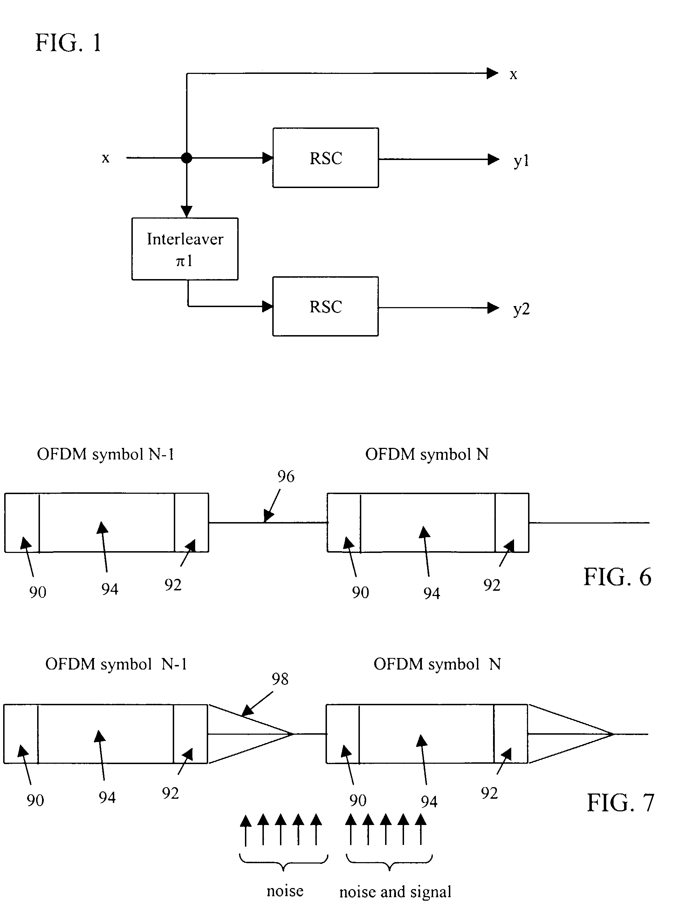

It will be recalled that a conventional turbocoder consists of two recursive systematic convolutional (RSC) coders and an interleaver, disposed as shown in **Figure 1**. The turbocoder outputs at each instant a triplet of binary elements (x, y1, y2), where x is the so-called systematic output of the turbocoder, that is to say one which has not undergone any processing with respect to the input signal x, y1 is the output coded by the first RSC coder, and y2 is the output coded by the second RSC coder after passing through the interleaver.

For more details on turbocodes, reference can usefully be made to the article by C. BERROU, A. GLAVIEUX and P. THITIMAJSHIMA entitled "Near Shannon limit error-correcting coding and decoding: turbo-codes", ICC '93, Geneva.

More advantageous than the usual conventional coding techniques, a coding using turbocodes has nevertheless the particularity of requiring, for correct functioning, a knowledge of the noise power.

The invention makes it possible to exploit this particularity in an advantageous and particularly suitable manner in the context of making more reliable a transmission of OFDM symbols which have undergone turbocoding, by providing a measure of the power of the noise between two consecutive OFDM symbols.

For the purpose indicated above, the present invention proposes a method of transmitting data in the form of successive symbols, from a local transmission system, having a local transmitter and a local receiver, to a distant transmission system, having a distant transmitter and a distant receiver, according to which, at the local transmitter:
- an operation of forming useful data blocks is performed, consisting of grouping together the data in blocks; remarkable in that it also includes steps according to which, at the local transmitter:
- a marking operation is performed, consisting of concatenating, with each block of useful data, a first marking signal, this first marking signal representing the value of the guard time to be complied with by the distant transmitter between two successive symbols and being determined by the local receiver on the basis of the quality of reception of the data coming from the distant transmitter; and
- a transmission operation is performed, consisting of transmitting the symbols, whilst respecting, between two successive symbols, a period of silence equal to the value of the guard time indicated by a second marking signal, this second marking signal having previously been received from the distant transmitter, after having been determined by the distant receiver on the basis of the quality of reception of the data coming from the local transmitter.

Thus, by adjusting the value of the guard time as a function of the quality of the received signals, the invention makes it possible to optimise the binary transmission rate.

It is also necessary to make the transmission more reliable, for example by the use of a turbocode. Thus, according to a particular characteristic, between the block formation and marking operations:
- an operation of preparation for error detection is performed, consisting of calculating, for each of the useful data blocks obtained previously, an error detection code, and concatenating this code with each of the blocks, so as to obtain frames;
- an operation of protection coding by redundancy is performed, consisting of coding, by means of a redundancy coder, each frame and the corresponding error detection code, so as to obtain encoded frames;
- a mapping operation is performed, consisting of associating, with each encoded frame, a set of points in a constellation, so as to obtain a plurality of symbols;
- an inverse transformation operation is performed, consisting of multiplying this plurality of symbols by the inverse matrix of an invertible transformation matrix, so as to obtain a plurality of complex amplitude values; and
- a synchronisation operation is performed, consisting of concatenating, with the plurality of complex amplitude values obtained previously, a synchronisation signal, so as to obtain a complex signal transporting the information necessary to the synchronisation of the receiver.

According to a particular characteristic, the operation of redundancy coding can use a turbocoder as a redundancy coder.

According to a particular characteristic, the invertible transformation implemented during the inverse transformation operation is for example a Fourier transformation.

The above two characteristics make it possible to combine the advantages of turbocoding and OFDM modulation, whilst optimising the binary transmission rate.

A description was given above of the interest of using OFDM symbols. The present invention will here be more particularly described in its application to OFDM modulation.

In a particular embodiment, the information relating to the guard time contained in the marking signal may be integrated into the synchronisation signal.

This makes it possible to add this information with minimum cost, since it is combined with the additions necessary for synchronisation between transmitter and receiver.

According to a particular characteristic, prior to the transmission operation, a transposed band modulation operation is performed, consisting of moving the symbols to be transmitted towards a predetermined frequency band.

According to a particular characteristic, during the mapping operation, an alphabet and a modulation of the QAM or QPSK type are used.

According to a particular characteristic, the marking signal contains at least one Barker sequence.

This type of sequence is particularly advantageous because of its correlation properties, the correlation peaks obtained with Barker sequences being very marked.

According to a particular characteristic, the marking signal includes two Barker sequences in series, the first Barker sequence being multiplied by a first predetermined value coded by a first bit, and the second Barker sequence being multiplied by a second predetermined value coded by a second bit, the binary word consisting of the first and second bits indicating, according to its value, whether it is necessary to increase the value of the guard time, or to reduce it, or to cause it to take a predetermined maximum value, or not to change it.

Thus two bits (which make it possible to code four states) suffice to determine the mode of adjusting the guard time.

As a variant, more bits could be used, in order to directly code the new guard time value.

According to a particular characteristic, during the mapping operation, there is added to each encoded frame a plurality of stuffing bits, this plurality of stuffing bits being able to be replaced by a series of bits transporting the marking signal.

These stuffing bits make it possible, not only to transport the marking signal, but also to round the number of bits in the data frame to a power of 2, which facilitates the mapping operation according to a modulation of the QPSK type.

For the same purpose as indicated above, the present invention also proposes a device for transmitting data in the form of successive symbols, from a local transmission system, having a local transmitter and local receiver, to a distant transmission system, having a distant transmitter and a distant receiver, having, at the local transmitter:
- a module for forming blocks of useful data, for grouping the data in blocks;
remarkable in that it also has, at the local transmitter:
- a marking module, for concatenating, with each block of useful data, a first marking signal, this marking signal representing the value of the guard time to be complied with by the distant transmitter between two successive symbols and being determined by the local receiver on the basis of the quality of reception of the data coming from the distant transmitter; and
- a transmission module, for transmitting the symbols, whilst respecting, between two successive symbols, a period of silence equal to the value of the guard time indicated by a second marking signal, this second marking signal having previously been received from the distant transmitter, after having been determined by the distant receiver on the basis of the quality of reception of the data coming from the local transmitter.

The present invention also proposes a method of receiving data in the form of successive symbols, by a local transmission system, having a local transmitter and a local receiver, from a distant transmission system, having a distant transmitter and a distant receiver, remarkable in that it includes steps according to which, at the local receiver:
- there is performed a reception operation, consisting of receiving, in the form of successive symbols, spaced apart in time by a guard time able to be adjusted automatically, data coming from the distant transmitter; and
- there is performed an operation of determining the change in the guard time to be complied with by the distant transmitter between two successive symbols, consisting of determining, according to the quality of reception of the data coming from the distant receiver, the value of at least two bits intended to be included in a marking signal by the local transmitter, these two bits forming a binary word representing the value of the guard time to be complied with by the distant transmitter.

According to a particular characteristic, during the operation of determining the change in the guard time, the value of a first and a second bits intended to be included in a marking signal by the local transmitter is determined, these first and second bits forming a binary word indicating, according to its value, whether the value of the guard time must increase or decrease or take a predetermined maximum value or remain constant.

According to a particular characteristic, the transmitter using a redundancy coder, the reception method is remarkable in that, between the operations of receiving and determining the change in the guard time, at the local receiver:
- a synchronisation and correlation operation is performed, for determining the start and end of each received symbol and for decoding, for each received symbol, the information carried by the marking signal coming from the distant transmitter, this synchronisation and correlation operation consisting of correlating each received symbol with this marking symbol, so as to obtain modulated blocks;
- a transformation operation is performed, consisting of multiplying each received modulated block by an invertible transformation matrix, so as to obtain a plurality of complex numbers representing respectively a plurality of points in a constellation;
- a demapping operation is performed, consisting of determining the received data associated with the plurality of points in the constellation, so as to obtain encoded frames;
- an encoded frame decoding operation is performed, consisting of decoding the encoded frames by means of a decoder corresponding to the redundancy coder used by the transmitter; and
- an error detection operation is performed, consisting of detecting, by means of an error detection code, possible errors in the decoded frames; and the reception method being also remarkable in that it also includes a step according to which:
- a noise measurement operation is performed, consisting of measuring the power of the noise during the guard time between two successive symbols.

According to a particular characteristic, during the synchronisation and correlation operation, the information carried by each marking signal is decoded using the polarity of at least one correlation peak obtained by correlating each received symbol with the marking signal.

Thus, in a very simple fashion, a correlation peak having a first type of polarity makes it possible to decode the value of the first bit coding the change in the guard time, and a correlation peak having a second type of polarity makes it possible to decode the value of the second bit coding the change in the guard time.

The present invention also proposes a device for receiving data in the form of successive symbols, by a local transmission system, having a local transmitter and a local receiver, coming from a distant transmission system, having a distant transmitter and a distant receiver, remarkable in that it has, at the local receiver:
- a reception module for receiving, in the form of successive symbols, spaced apart in time by a guard time able to be adjusted automatically, data coming from the distant transmitter; and
- a module for determining the change in the guard time to be complied with by the distant transmitter between two successive symbols, in order to determine, according to the quality of reception of the data coming from the distant transmitter, the value of at least two bits intended to be included in a marking signal by the local transmitter, these two bits forming a binary word representing the value of the guard time to be complied with by the distant transmitter.

The present invention also relates to a digital signal processing apparatus, having means adapted to implement a transmission method such as the one above.

The present invention also relates to a digital signal processing apparatus, having means adapted to implement a reception method such as the one above.

The present invention also relates to a digital signal processing apparatus, having a transmission device such as the one above.

The present invention also relates to a digital signal processing apparatus, having a reception device such as the one above.

The present invention also relates to a telecommunication network, having means adapted to implement a transmission method such as the one above.

The present invention also relates to a telecommunication network, having means adapted to implement a reception method such as the one above.

The present invention also relates to a telecommunication network, having a transmission device such as the one above.

The present invention also relates to a telecommunication network, having a reception device such as the one above.

The present invention also relates to a mobile station in a telecommunication network, having means adapted to implement a transmission method such as the one above.

The present invention also relates to a mobile station in a telecommunication network, having means adapted to implement a reception method such as the one above.

The present invention also relates to a mobile station in a telecommunication network, having a transmission device such as the one above.

The present invention also relates to a mobile station in a telecommunication network, having a reception device such as the one above.

The invention also relates to:
- an information storage means which can be read by a computer or microprocessor storing instructions of a computer program, making it possible to implement the transmission method of the invention such as the one above, and
- an information storage means which is removable, partially or totally, which can be read by a computer or microprocessor storing instructions of a computer program, making it possible to implement the transmission method of the invention such as the one above.

The invention also relates to:
- an information storage means which can be read by a computer or microprocessor storing instructions of a computer program, making it possible to implement the reception method of the invention such as the one above, and
- an information storage means which is removable, partially or totally, which can be read by a computer or microprocessor storing instructions of a computer program, making it possible to implement the reception method of the invention such as the one above.

The invention also relates to a computer program product comprising software code portions for implementing a transmission method and/or a reception method as above.

The particular characteristics and the advantages of the transmission device, of the reception method and device, of the different digital signal processing apparatus, of the different telecommunication networks, of the different mobile stations, of the information storage means and of the computer program product being the same as those of the transmission method according to the invention, these particular characteristics and advantages are not repeated here.

Other aspects and advantages of the invention will emerge from a reading of the following detailed description of particular embodiments, given by way of non-limitative examples. The description refers to the drawings which accompany it, in which:
- Figure 1, already described, depicts schematically the structure of a conventional turbocoder;
- Figure 2A is a flow diagram illustrating the main steps of the transmission method of the present invention;
- Figure 2B is a flow diagram illustrating the steps of the transmission method of the present invention, in a particular embodiment where a turbocoding, an OFDM modulation and a transposed band modulation of the data to be transmitted are carried out;
- Figure 3 depicts schematically a transmission device according to the present invention, in a particular embodiment;
- Figure 4A is a flow diagram illustrating the main steps of the reception method of the present invention;
- Figure 4B is a flow diagram illustrating the steps of the reception method of the present invention, in a particular embodiment where transmission has been effected in accordance with the particular embodiment of the transmission method illustrated by Figure 2B;
- Figure 5 depicts schematically a reception device according to the present invention, in a particular embodiment;
- Figure 6 depicts schematically the overall structure of two successive OFDM symbols at the time of transmission, according to the present invention;
- Figure 7 depicts schematically the overall structure of two successive OFDM symbols at the time of reception, according to the present invention; and
- Figure 8 depicts schematically a transmission system including a transmission device and a reception device according to the present invention, in a particular embodiment.

In the following, a full-duplex transmission system is considered, having a first so-called local transceiver, possibly mobile, situated at a given instant at a first geographical position A, and a second so-called distant transceiver, possibly mobile, situated at a given instant at a second geographical position B. It is considered that these two transceivers are synchronous.

The transmission method of the invention is described below with respect to the local transmitter A. A similar description is valid for the distant transmitter B.

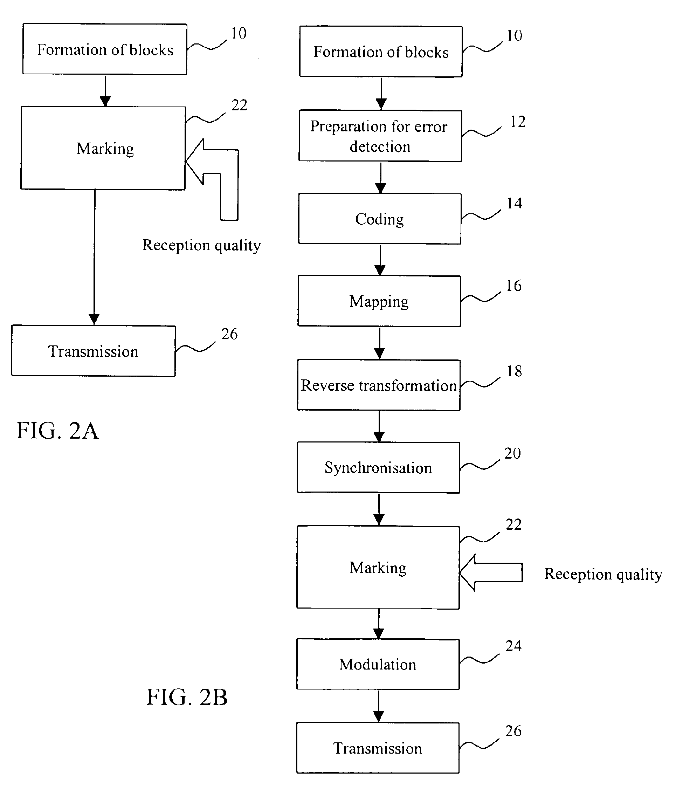

As shown in **Figure 2A**, the transmission method of the invention includes three main steps. It is sought to transmit binary data, referred to as useful data, in the form of successive symbols obtained after a certain number of processings. A first step 10 consists of grouping together the useful data in blocks with a length which may be variable.

Then a step 22 consists of concatenating, with each block of useful data, a specific signal referred to as the first marking signal. The function of this first marking signal is to indicate to the distant transmitter what should be the change in the value of the guard time between two successive symbols, namely whether this value should increase, or decrease, or take a predetermined maximum value, or remain constant.

The value of the guard time and consequently the structure of the marking signal are determined by the local receiver, according to the quality of reception of the data coming from the distant transmitter. The determination of the guard time and the nature of the marking signal are therefore described below in the context of the reception method of the invention.

There is concatenated with each block of useful data the marking signal associated with this block, by adding the marking signal at the start of the block and/or at the end of this block, or inside this block.

As shown in Figure 2A, the final step 26 of the transmission method consists of transmitting the blocks of useful data and their associated marking signals in the form of successive symbols over a transmission channel, respecting between two successive symbols a period of silence equal to the value of the guard time indicated by a second marking signal, previously received from the distant transmitter B, decoded by the local receiver A (in a manner described below) and stored in memory.

This second marking signal was previously determined by the distant receiver B on the basis of the quality of reception of the data coming from the local transmitter A.

In the particular embodiment in **Figure 2B**, the blocks of useful data are transmitted in the form of OFDM symbols and a turbocoding is applied to them, as well as a transposed band modulation, before transmission.

For this purpose, follwing step 10 of formation of useful data blocks, during which, by way of non-limitative example, blocks of M = 660 bits are formed, there is calculated, at step 12, an error detection code, such as for example a cyclic redundancy code (CRC), and the result, for example coded in 16 bits, is concatenated with the 660 bits of useful data. It is for example possible to use the CRC - CCITT with generator polynomial X¹⁶ + X¹² + X⁵ + 1, that is to say the calculation of the CRC amounts to multiplying the block of useful data under consideration by this polynomial. In this way frames of 676 bits are obtained.

The following step 14 consists of supplying these frames of 676 bits to a redundancy coder of a conventional type, for example a turbocoder such as the one illustrated in Figure 1 described above. This turbocoder can for example include an interleaver of the so-called "x to x^{e}" type, known to persons skilled in the art, with e = 32. In the particular example described here, the turbocoder restores, by means of its three outputs, encoded frames of 679 x 3 = 2037 bits.

As a variant, the redundancy coder could use, not a turbocode, but a conventional convolutional code.

Next, at step 16, 11 stuffing bits of known values are added to each encoded frame of 2037 bits, in order to obtain encoded frames of 2048 bits. With each of these encoded frames thus supplemented, there is associated, according to the conventional QPSK *(Quaternary Phase Shift Keying)* modulation technique, a set of 1024 points of a constellation each constituting a QPSK symbol. In this so-called mapping step, the data bits can possibly be coded as symbols differentially.

During the following step 18, the 1024 QPSK symbols are multiplied by the inverse matrix of an invertible transformation matrix. For example, an inverse discrete Fourier transformation, or an inverse discrete Hadamard transformation, can be applied to the 1024 QPSK symbols. At the end of step 18, 1024 values of complex amplitudes forming a modulated block are obtained. In the case where an inverse discrete Fourier transformation is applied, the Cooley Tuckey algorithm is advantageously used, since 1024 is a power of 4.

Step 20 illustrated by Figure 2B is a step of adding the elements necessary to the synchronisation of the receiver. This step has been arbitrarily placed after the inverse transformation step 18; however, it can be carried out at any other stage in the transmission method. It consists of adding one or more synchronisation sequences of a conventional type to the data to be transmitted. It is for example possible to concatenate, with each modulated block, a first synchronisation sequence upstream of the block, in a preamble, as well as a second synchronisation sequence downstream of the block, in a postamble.

Each block of useful data thus processed is by definition an OFDM symbol, consisting of several variations in state of the input of the transmission channel.

In accordance with the invention, step 22 consists of adding, to each block of useful data, a marking signal representing the value of the guard time to be complied with by the distant transmitter B between two successive symbols.

In order to facilitate the synchronisation of the distant receiver with the local transmitter, it is necessary to consider that the values indicating the duration of the guard time are quantized, that is to say they belong to a finite set of discrete values, each value being a multiple of a base value, which is chosen equal to a multiple of the period of a reference clock of the transmitter in order to facilitate implementation.

During step 22, it is possible for example to add a marking signal upstream and downstream of each encoded frame of 2048 bits obtained at the end of the turbocoding step 14 after adding stuffing bits. As a variant, the marking signal could be added solely upstream or solely downstream of this encoded frame, or within the frame.

In the particular non-limitative example embodiment described here, the marking signal is composed of two Barker sequences of length 13 disposed in series. Barker sequences are known to persons skilled in the art and will not be described here. Their correlation properties are used to facilitate the recovery of the information relating to the guard time at the time of reception. This is because the Barker sequences have the advantage of having very marked correlation peaks.

Here the first Barker sequence is multiplied by a value C belonging to the set {-1, +1}, and the second Barker sequence is multiplied by a value D also belonging to the set {-1, +1}. The choice of the values C and D is made on reception, according to the quality of reception, and is described below.

However, as a variant, the values C and D can be transported by other means than by means of Barker sequences.

For example, it was seen that at the end of the inverse transformation step 18, a vector containing 1024 values of complex amplitudes is obtained. It is possible to concatenate with this complex vector two times a sequence consisting of a predetermined number of the first elements of this vector, and to transmit the vector thus supplemented. It should be noted that the aforementioned sequence can be substituted for the guard time. In this case, according to the invention, the variation in the guard time is replaced by the variation in the sequence.

In the variant described, on reception, a delay line is provided, very simple to implement, introducing a delay corresponding to the duration of a transmitted symbol. Using a correlator such as the one described in the document US-A-5 602 835, this correlator receiving as an input, on the one hand, the received symbol and, on the other hand, the received symbol delayed by the aforementioned delay line, there is obtained at the output of the correlator two pulses relating to the real part of the complex vector and two pulses relating to the imaginary part of the complex vector, these pulses appearing periodically according to the rate of the OFDM symbols.

Given that the vector is complex, it suffices to independently modify the sign of the real part and the sign of the imaginary part in order to be able to transport the values of C and D.

An optional step 24 consists of modulating the OFDM symbols thus processed in transposed band, before transmitting them over a transmission channel at step 26, from the first transceiver A to the second transceiver B, respecting between two successive symbols a period of silence equal to the value of the guard time transported by the marking signal received from the transmitter B, decoded by the receiver A and stored in memory.

It should be stated that, given that the transmission system under consideration is full duplex, the steps which have just been described are effected both by the transmitter in the geographical position A to the receiver in the geographical position B and by the transmitter in the geographical position B to the receiver in the geographical position A.

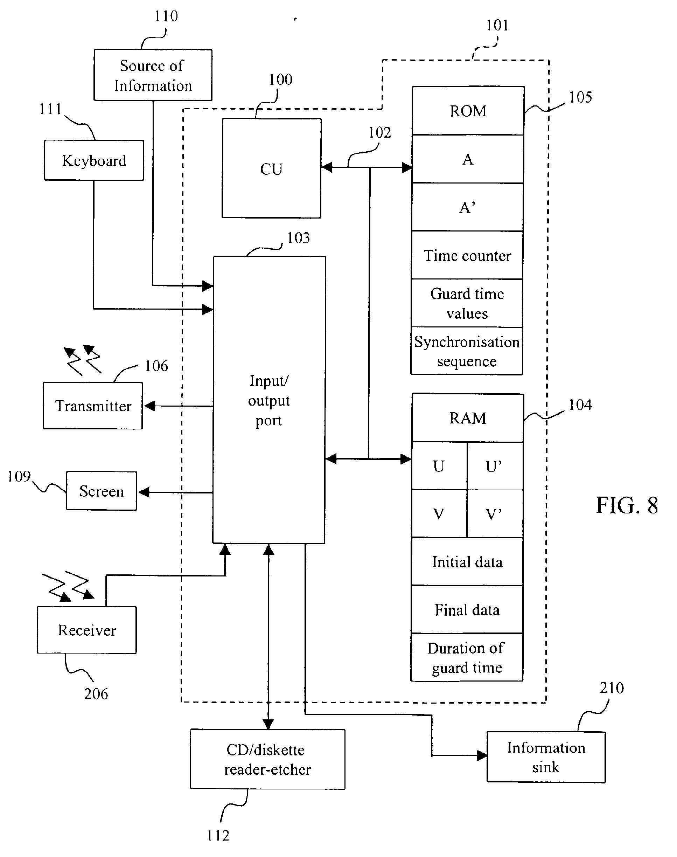

As shown in **Figure 6**, two successive OFDM symbols transmitted, designated by the indices N-1 and N, N being an integer greater than 1, have the following structure: each symbol has a part 94 transporting the data of the message to be transmitted, a first synchronisation sequence 90 in the preamble, and a second synchronisation sequence 92 in the postamble. In the example illustrated by Figure 6, the sequences intended for synchronisation also carry the information relating to the change in the guard time intended for the transmitting part of the second transceiver.

Thus, in accordance with the present invention, in this particular embodiment, the addition of the information relating to the guard time takes place at a minimum cost, since this information is combined with the additions necessary for the synchronisation between transmitter and receiver.

The line 96 represents the guard time between the two successive OFDM symbols N-1 and N.

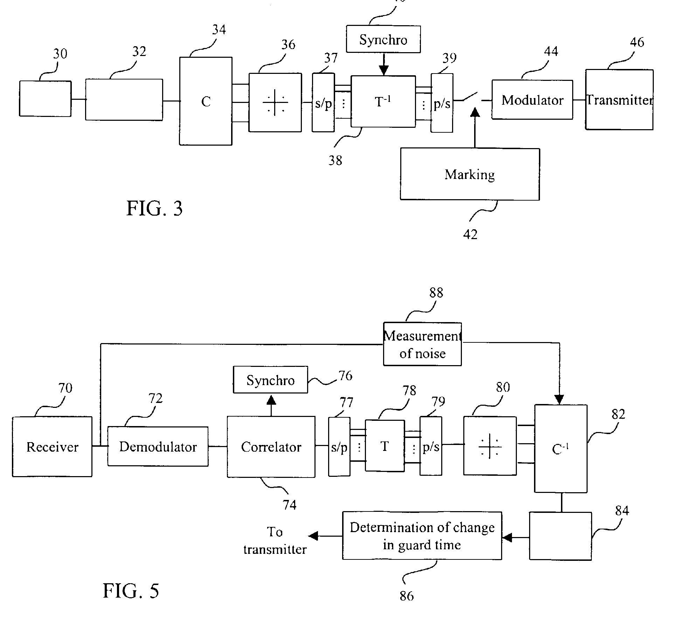

**Figure 3** illustrates schematically the different modules of a transmission device able to effect the steps of the transmission method of the invention in the particular embodiment described previously by means of Figure 2B.

This transmission device has a module 30 for forming blocks of useful data, for grouping together the data to be transmitted in blocks with a length which may be variable.

The module 30 for forming useful data blocks is connected to an error detection preparation module 32, which calculates, for each block of useful data, an error detection code, such as for example a cyclic redundancy code, and which concatenates this code with the block under consideration, so as to supply frames as an output.

The error detection preparation module 32 is connected to a redundancy coder 34, for example a turbocoder of the type described above with the help of Figure 1, which codes the frames supplied by the module 30 and which supplies as an output three series of binary elements x, y1, y2, as described above.

In the example where the coder 34 is a turbocoder, this turbocoder is connected to a mapping module 36, which associates, with the series of binary words of 3 bits formed from the three series of bits supplied at the output of the turbocoder, a set of points in a constellation according to a modulation of the QPSK type, so as to obtain a plurality of symbols.

These symbols are supplied as an input to an inverse transformation module 38, which multiplies these symbols by the inverse matrix of an invertible transformation matrix, for example an inverse fast Fourier transformation matrix, or an inverse Hadamard transformation matrix, so as to obtain a plurality of values of complex amplitudes.

The inverse transformation module 38 is, conventionally, preceded by a serial/parallel transformation module 37 and followed by a parallel/serial transformation module 39.

A synchronisation module 40 adds a synchronisation signal to the plurality of values of complex amplitudes supplied at the output of the inverse transformation module 38. However, the representation chosen in Figure 3 is in no way limitative: the synchronisation module 40 could just as well be situated further upstream in the transmission chain.

Likewise, the marking module 42, which concatenates, with each block of useful data, a marking signal indicating whether the value of the guard time should increase or decrease or take a predetermined maximum value or remain constant, has been depicted arbitrarily at the output of the inverse transformation module 38. As a variant, the marking module 42 could just as well be situated further upstream in the transmission chain.

The marking signal can have the structure, based on Barker sequences, described in the context of the transmission method.

This marking signal can be transported by stuffing bits, added to the data at the output of the coder 34, before mapping.

At the output of the inverse transformation module 38, OFDM symbols are obtained each transporting an item of information relating to the value of the guard time.

An optional modulation module 44 is connected to the inverse transformation module 38. Its function is to modulate the OFDM symbols in a transposed band before transmission by a transmitter 46.

The transmitter 46 provides a guard time between each OFDM symbol, the value of this guard time being indicated by the information received from the transmitter B, decoded by the receiver A and stored in memory.

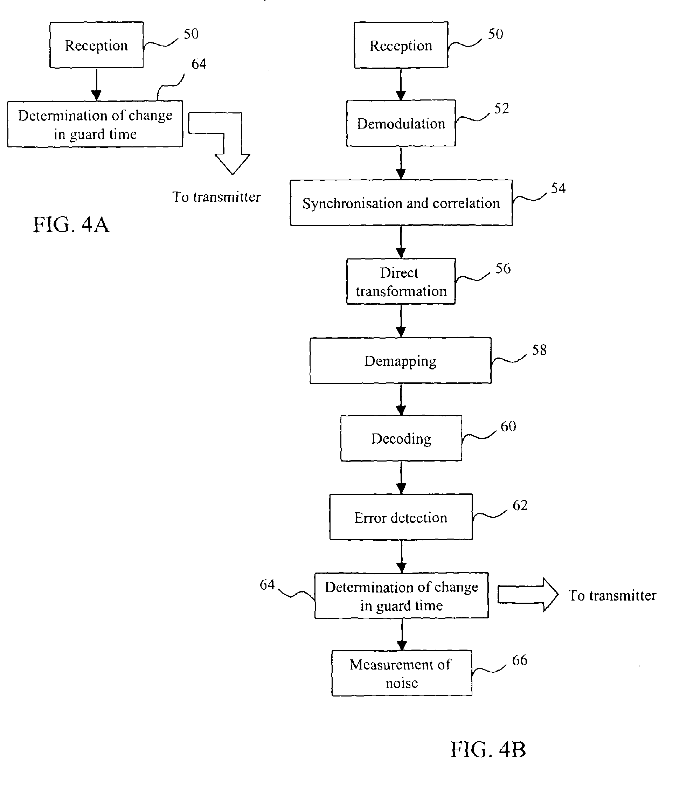

After passing through the transmission channel, the OFDM symbols are received during a reception step 50 shown schematically in **Figure 4A**.

According to the invention, the step 64 then consists of determining what the change in the value of the guard time should be.

It has been seen that this change can follow principally four states: the value of the guard time can: (1) increase, if the reception quality is insufficient; (2) decrease, if the reception quality is satisfactory and it is wished to increase the binary transmission rate; (3) remain constant, if the reception quality is satisfactory and the binary rate is sufficient; or (4) take a predetermined maximum value, necessary for example during a phase of starting up the transmission system.

Two bits therefore suffice (which make it possible to code four values) for coding the change in the guard time. The step 64 therefore consists of determining the value of two bits C and D intended to be included in a marking signal to be transmitted from the receiver of a given transceiver to the transmitter of the other transceiver.

**Figure 4B** illustrates the successive steps of the reception method in the case where the transmission method has taken place in accordance with the particular embodiment of Figure 2B.

Following the reception step 50, a demodulation step 52 is performed, corresponding to the transposed band modulation step 24 of Figure 2B, in the case where the latter was effected at the time of transmission.

Then a synchronisation and correlation step 54 is carried out. This step consists of determining the start and end of each symbol received and extracting from each symbol the two information bits C and D included in the marking signal which this symbol transports. For this purpose, in the example where the marking signal includes two Barker sequences, a correlation is effected between the symbol received and each Barker sequence. In this way two correlation peaks are generated, which make it possible to determine both the start and end of the symbol under consideration, but also to recover the value of the bits C and D, that is to say -1 or +1, according to the polarity of the peaks. At the end of this step 54, modulated blocks are obtained.

The following step 56 consists of multiplying the modulated blocks, each consisting of 1024 symbols in the example given in the context of the transmission method of Figure 2B, by the matrix of a reversible transformation, so as to apply, on reception, the direct transformation corresponding to the reverse transformation applied to the transmission, that is to say for example a direct discrete Fourier transformation, or a direct Hadamard transformation. In the example, encoded frames of 2048 complex numbers close to the QPSK alphabet are obtained.

During the following demapping step 58, the real part and the imaginary of each of these complex numbers are obtained by projection, respectively onto the real axis I and the imaginary axis Q of the Fresnel plane in which the QPSK constellation is situated.

During the following step 60, the eleven values relating to the stuffing bits are eliminated in order to return to an encoded frame of 679 x 3 bits, to which a conventional decoding is applied, corresponding to the coding applied on transmission (for example, a turbodecoding if a turbocoding was applied on transmission), in order to obtain a decoded frame of 676 bits at the end of step 60.

Next a step 62 of detecting transmission errors is carried out, using an error detection code (for example a cyclic redundancy code) added to each block of data before transmission.

It is the result obtained after processing by the error detection code, at step 62, which determines, during the following step 64 of determining the change in guard time, the value of the bits C and D to be included in the marking signal to be transmitted.

The bits C and D form a binary word referred to as the guard time modification request. If the processing by the error detection code has revealed the presence of errors, and if the errors are due to an excessively high power of the echo, the increase in the guard time can make it possible to reduce the power of the echo present in the symbols received, and to reduce the error rate on reception. If no error is detected, it is on the other hand possible to reduce the guard time.

The bits C and D, forming the binary word "CD", can for example be coded as follows. The word "00" signifies that the guard time must be kept constant; the word "01" signifies that the guard time must be increased; the word "10" signifies that the guard time must be reduced; and the word "11" signifies that the guard time must take its maximum value.

The marking signal including the bits C and D is transmitted from the receiver of a given transceiver to the transmitter of the other transceiver.

When the redundancy code used on transmission is a turbocode, the decoding, on reception, is effected iteratively. A predetermined number of iterations can be chosen, for example eight iterations, this example being in no way limitative.

In a particular embodiment, at step 62, the cyclic redundancy code is verified after these iterations and a decision is then made, at step 64, on the duration of the guard time which the transmitter will have to apply.

As a variant, the cyclic redundancy code can be verified after each iteration, and the guard time can be defined as a function of the number of iterations sufficient for obtaining a predetermined error rate. For example, if all the frames are decoded without error from the very first iteration, it is clear that the guard time can be shortened. On the other hand, if there are always errors after the eighth iteration on all the frames, it is necessary to extend the guard time. Between these two extreme cases, and taking into account averages of the required latency over several frames, it is thus possible to use a large number of strategies.

The reception method, in the particular embodiment of Figure 4B, also includes a step 66 of noise measurement, arbitrarily depicted at the end of the step 64 of determining the change in the guard time but being able to be effected at any other stage of the reception chain.

This step 66, necessary for the correct functioning of the turbodecoder, consists of measuring the power of the noise during the guard time between two successive OFDM symbols received. It is possible for example to measure the power of the noise at several moments during the guard time, in order to obtain a statistic of the noise which makes it possible to distinguish, on the one hand, the noise and, on the other hand, the echo of the first of the two successive OFDM symbols considered. The two statistics of the noise and echo can be discerned by virtue of natural decrease in the echo, whose power is presented as a decreasing statistic, whereas the power of the noise is presented as a statistical data with a constant mean.

It is also necessary, for the correct functioning of the decoder corresponding to the redundancy coder, to effect a measurement of the power of each OFDM symbol received, in order to collect a statistic of the signal and of the noise mixed with the signal.

The measurements of the noise and of the signal can for example be made by means of an analogue to digital converter.

As shown by **Figure 7**, two successive OFDM symbols received, designated by the indices N-1 and N and corresponding to the two OFDM symbols transmitted, described above by means of Figure 6, have the following structure. The reference numbers 90, 92 and 94 designate the same parts of the symbol as at the time of transmission. An echo 98 follows each OFDM signal, occupying part of the guard time.

The arrows indicate that the measurement of the noise is carried out at several instants during the guard time between the symbols N-1 and N, and then the noise mixed with the signal is measured at the start of the symbol N.

**Figure 5** illustrates schematically the different modules of a reception device able to perform the steps of the reception method of the invention in the particular embodiment described above with the help of Figure 4B.

This reception device has a receiver 70 which receives successive OFDM symbols spaced apart by the prescribed guard time. In the case where the data have been transposed-band modulated before transmission, the device has a demodulator 72 for returning the data to baseband.

A correlation module 74 and a synchronisation module 76 determine the start and end of each symbol received and decode the information carried by the aforementioned bits C and D of the marking signal associated with each symbol, correlating each symbol received with two Barker sequences, as described previously in the context of the reception method.

A transformation module 78 multiplies the received symbols by the matrix of a reversible transformation, so as to apply on reception the direct transformation corresponding to the reverse transformation applied to the transmission, that is to say, for example, a direct discrete Fourier transformation, or a direct Hadamard transformation. The module 78 supplies as an output complex numbers representing respectively points in a QPSK constellation.

The transformation module 78 is, conventionally, preceded by a serial to parallel transformation module 77 and followed by a parallel to serial transformation module 79.

A demapping module 80 determines the series of bits associated with the points in the constellation and supplies them as an input to a decoder 82 corresponding to the redundancy coder used by the transmitter (the decoder 82 is a turbodecoder if the transmitter uses a turbocoder).

A noise measurement module 88 supplies to the decoder 82, on the one hand, a measurement of the power of the noise, taken during the guard time and between two successive symbols received, and, on the other hand, a measurement of the power of the noise mixed with the signal, taken during the reception of a symbol.

An error detection module 84 is connected to the output of the decoder 82, in order to detect, by means of an error detection code, such as a cyclic redundancy code, possible errors in the decoded received data. As a variant, the error detection could be integrated into the decoder and there would be no individualised module 84.

Finally, the error detection module 84 controls a module 86 for determining the change in the guard time which, according to the number of errors detected, that is to say according to the reception quality, determines the change in the guard time (increase, decrease, maximum value, maintaining at the same value).

**Figure 8** depicts schematically an embodiment of a transmission system including a transmission device and a reception device according to the invention, using the basic elements and the usual peripherals of a computer 101.

An input/output port 103 connects a central unit 100, by means of a bus 102, to a keyboard 111, a screen 109 and an optical or magnetic or any other kind of reader/etcher 112, for example of the compact disc player or floppy disk player type.

The input/output port 103 is also connected to a transmitter 106 and to a receiver 206, as well as to an information source 110, coming from the user of the data, and to an information sink 210, going to the user. The information source and sink can be integral parts of the computer itself.

A program, stored in a read-only memory (ROM) 105, contains the instructions to be executed following the succession described with the help of Figure 2B for transmission, and following the succession described with the help of Figure 4B for reception.

The ROM 105, connected to the central unit 100 and to the input/output port 103 by means of the bus 102, can also contain the values of the Fourier transform A and of its inverse A', in the form of matrices. A time counter, for purposes of synchronisation, the synchronisation sequence itself and a table of correspondence between the values of the bits C and D and the direction of the corresponding change in the guard time can also be stored in the ROM 105.

Finally, the transmission system includes a random access memory (RAM) 104, which serves as a relay for the data to be transmitted ("initial data") and the data received ("final data").

The RAM 104, connected to the central unit 100, to the input/output port 103 and to the ROM 105 by means of the bus 102, also contains the data issuing from the mapping, in the form of a vector U, as well as their inverse Fourier transform U', for transmission, and the data obtained at the time of reception after direct Fourier transformation, in the form of a vector V', and the data issuing from the demapping, in the form of a vector V.

The RAM 104 also contains the current values of the guard time.

As a variant, the successions of instructions able to implement the transmission and reception methods of the invention may not reside in ROM, but may be read from the reader 112 and then loaded into RAM, before being executed.

## Claims

1. Method of transmitting data in the form of successive symbols, from a local transmission system, having a local transmitter and a local receiver, to a distant transmission system, having a distant transmitter and a distant receiver, according to which, at the local transmitter:
- an operation (10) of forming useful data blocks is performed, consisting of grouping together the data in blocks;
characterised in that it also includes steps according to which, at the local transmitter:
- a marking operation (22) is performed, consisting of concatenating, with each block of useful data, a first marking signal, said first marking signal representing the value of the guard time to be complied with by the distant transmitter between two successive symbols and being determined by the local receiver on the basis of the quality of reception of said data coming from the distant transmitter; and
- a transmission operation (26) is performed, consisting of transmitting said symbols, whilst respecting, between two successive symbols, a period of silence equal to the value of the guard time indicated by a second marking signals, said second marking signal having previously been received from the distant transmitter, after having been determined by the distant receiver on the basis of the quality of reception of the data coming from the local transmitter.

2. Transmission method according to Claim 1, characterised in that, between said block formation and marking operations:
- an operation (12) of preparation for error detection is performed, consisting of calculating, for each of said useful data blocks obtained previously, an error detection code, and concatenating said code with each of said blocks, so as to obtain frames;
- an operation (14) of redundancy coding is performed, consisting of coding, by means of a redundancy coder, each frame and the corresponding error detection code, so as to obtain encoded frames;
- a mapping operation (16) is performed, consisting of associating, with each encoded frame, a set of points in a constellation, so as to obtain a plurality of symbols;
- an inverse transformation operation (18) is performed, consisting of multiplying said plurality of symbols by the inverse matrix of an invertible transformation matrix, so as to obtain a plurality of complex amplitude values; and
- a synchronisation operation (20) is performed, consisting of concatenating, with said plurality of complex amplitude values obtained previously, a synchronisation signal, so as to obtain a complex signal transporting the information necessary to the synchronisation of the receiver.

3. Transmission method according to Claim 2, characterised in that said redundancy coding operation (14) uses a turbocoder as the redundancy coder.

4. Transmission method according to Claim 2 or 3, characterised in that said invertible transformation implemented during said inverse transformation operation (18) is a Fourier transformation.

5. Transmission method according to Claim 2, 3 or 4, characterised in that the information relating to the guard time contained in said marking signal is inserted in said synchronisation signal.

6. Transmission method according to any one of Claims 1 to 5, characterised in that, prior to said transmission operation, a transposed band modulation operation (24) is performed, consisting of moving said symbols to be transmitted towards a predetermined frequency band.

7. Transmission method according to any one of Claims 2 to 6, characterised in that, during said mapping operation, an alphabet and modulation of the QAM or QPSK type are used.

8. Transmission method according to any one of Claims 1 to 7, characterised in that said marking signal includes at least one Barker sequence.

9. Transmission method according to Claim 8, characterised in that said marking signal includes two Barker sequences in series, the first Barker sequence being multiplied by a first predetermined value (C) coded by a first bit, and the second Barker sequence being multiplied by a second predetermined value (D) coded by a second bit, the binary word consisting of said first and second bits indicating, according to its value, whether it is necessary to increase the value of the guard time, or to decrease it, or to cause it to take a predetermined maximum value, or not to modify it.

10. Transmission method according to any one of Claims 2 to 9, characterised in that, during said mapping operation, a plurality of stuffing bits are added to each encoded frame.

11. Device for transmitting data in the form of successive symbols, from a local transmission system, having a local transmitter and local receiver, to a distant transmission system, having a distant transmitter and a distant receiver, having, at the local transmitter:
- means (30) for forming blocks of useful data, for grouping said data in blocks;
characterized in that it also has, at the local transmitter:
- marking means (42), for concatenating, with each block of useful data, a first marking signal, said marking signal representing the value of the guard time to be complied with by the distant transmitter between two successive symbols and being determined by the local receiver on the basis of the quality of reception of the data coming from the distant transmitter; and
- transmission means (46), for transmitting said symbols, whilst respecting between two successive symbols a period of silence equal to the value of the guard time indicated by a second marking signal, said second marking signal having previously been received from the distant transmitter, after having been determined by the distant receiver on the basis of the quality of reception of the data coming from the local transmitter.

12. Transmission device according to Claim 11, characterised in that the information relating to the guard time contained in said marking signal is inserted in said synchronisation signal.

13. Transmission device according to Claim 11 or 12, characterised in that it also has:
- means (32) for preparing for the detection of errors, for calculating, for each of said useful data blocks obtained previously, an error detection code, and for concatenating said code with each of said blocks, so as to obtain frames;
- means (34) for redundancy coding, for coding by means of a redundancy coder each frame and the corresponding error detection code, so as to obtain encoded frames;
- mapping means (36), for associating a set of points in a constellation with each encoded frame, so as to obtain a plurality of symbols;
- reverse transformation means (38), for multiplying said plurality of symbols by the inverse matrix of an invertible transformation matrix, so as to obtain a plurality of complex amplitude values; and
- synchronisation means (40), for concatenating a synchronisation signal with said plurality of complex amplitude values obtained previously, so as to obtain a complex signal transporting the information necessary to the synchronisation of the receiver.

14. Transmission device according to Claim 13, characterised in that said means (34) for redundancy coding have a turbocoder as a redundancy coder.

15. Transmission device according to Claim 13 or 14, characterised in that said invertible transformation implemented by said reverse transformation means (38) is a Fourier transformation.

16. Transmission device according to any one of Claims 11 to 15, characterised in that it also has modulation means (44), for modulating said blocks in a transposed band.

17. Transmission device according to any one of Claims 12 to 16, characterised in that said mapping means (36) use an alphabet and modulation of the QAM or QPSK type.

18. Transmission device according to any one of Claims 11 to 17, characterised in that said marking signal includes at least one Barker sequence.

19. Transmission device according to Claim 18, characterised in that said marking signal includes two Barker sequences in series, the first Barker sequence being multiplied by a first predetermined value (C) coded by a first bit, and the second Barker sequence being multiplied by a second predetermined value (D) coded by a second bit, the binary word consisting of said first and second bits indicating, according to its value, whether it is necessary to increase the value of the guard time, or to decrease it, or to make it take a predetermined maximum value, or not to modify it.

20. Transmission device according to any one of Claims 11 to 19, characterised in that said mapping means (36) add a plurality of stuffing bits to each encoded frame, said plurality of stuffing bits being used for transporting said marking signal.

21. Method of receiving data in the form of successive symbols, by a local transmission system, having a local transmitter and a local receiver, from a distant transmission system, having a distant transmitter and a distant receiver, characterised in that it includes steps according to which, at the local receiver:
- there is performed a reception operation (50), consisting of receiving, in the form of successive symbols, spaced apart in time by a guard time able to be adjusted automatically, data coming from the distant transmitter; and
- there is performed an operation (64) of determining the change in the guard time to be complied with by the distant transmitter between two successive symbols, consisting of determining, according to the quality of reception of the data coming from the distant receiver, the value of at least two bits intended to be included in a marking signal by the local transmitter, these two bits forming a binary word representing the value of the guard time to be complied with by the distant transmitter.

22. Reception method according to Claim 21, characterised in that, during said operation of determining the change in the guard time, the values of a first and a second bits (C, D) intended to be included in a marking signal by the local transmitter are determined, said first and second bits forming a binary word indicating, according to its value, whether the value of the guard time must increase or decrease or take a predetermined maximum value or remain constant.

23. Reception method according to Claim 21 or 22, said transmitter using a redundancy coder, characterised in that, between said operations of receiving and determining the change in the guard time, at the local receiver:
- a synchronisation and correlation operation (54) is performed, in order to determine the start and end of each received symbol and for decoding, for each received symbol, the information carried by the marking signal coming from the distant transmitter, said synchronisation and correlation operation consisting of correlating each received symbol with said marking symbol, so as to obtain modulated blocks;
- a transformation operation (56) is performed, consisting of multiplying each received modulated block by an invertible transformation matrix, so as to obtain a plurality of complex numbers representing respectively a plurality of points in a constellation;
- a demapping operation is performed, consisting of determining the received data associated with said plurality of points in the constellation, so as to obtain encoded frames;
- an encoded frame decoding operation (60) is performed, consisting of decoding said encoded frames by means of a decoder corresponding to the redundancy coder used by the transmitter, so as to obtain decoded frames; and
- an error detection operation (62) is performed, consisting of detecting, by means of an error detection code, possible errors in said decoded frames;
and in that it also includes a step according to which:
- a noise measurement operation (66) is performed, consisting of measuring the power of the noise during the guard time between two successive symbols.

24. Reception method according to Claim 23, characterised in that said operation of decoding encoded frames (60) uses a turbodecoder as a decoder.

25. Reception method according to Claim 23 or 24, characterised in that said invertible transformation implemented during said transformation operation (56) is a Fourier transformation.

26. Reception method according to Claim 23, 24 or 25, characterised in that said operation of decoding encoded frames (60) is an iterative operation including a predetermined number of iterations, in that said error detection operation (62) is performed at the end of said predetermined number of iterations, and in that said operation of determining the change in the guard time (64) is next performed.

27. Reception method according to Claim 23, 24 or 25, characterised in that said operation of decoding encoded frames (60) is an iterative operation including a predetermined number of iterations, in that said error detection operation (62) is performed after each of said iterations, and in that, during said operation of determining the change in the guard time (64), said guard time is defined as a function of the number of iterations sufficient for obtaining a predetermined error rate.

28. Reception method according to any one of Claims 21 to 27, said symbols having been modulated in a transposed band before transmission, characterised in that, following said reception operation, a demodulation operation is performed (52), consisting of demodulating each received symbol.

29. Reception method according to any one of Claims 23 to 28, characterised in that, during said demapping operation, an alphabet and demodulation of the QAM or QPSK type are used.

30. Reception method according to any one of Claims 22 to 29, characterised in that, during said synchronisation and correlation operation, the information carried by each marking signal is decoded using the polarity of at least one correlation peak obtained by correlating each symbol received with said marking signal.

31. Reception method according to any one of Claims 21 to 30, characterised in that said marking signal includes at least one Barker sequence.

32. Reception method according to Claim 31, characterised in that said marking signal includes two Barker sequences in series, the first Barker sequence being multiplied by a first predetermined value (C) coded by said first bit, and the second Barker sequence being multiplied by a second predetermined value (D) coded by said second bit.

33. Device for receiving data in the form of successive symbols, by means of a local transmission system, having a local transmitter and a local receiver, coming from a distant transmission system, having a distant transmitter and a distant receiver, characterised in that it has, at the local receiver:
- reception means (70) for receiving, in the form of successive symbols, spaced apart in time by a guard time able to be adjusted automatically, data coming from the distant transmitter; and
- means (86) for determining the change in the guard time to be complied with by the distant transmitter between two successive symbols, in order to determine, according to the quality of reception of the data coming from the distant transmitter, the value of at least two bits intended to be included in a marking signal by the local transmitter, said two bits forming a binary word representing the value of said guard time to be complied with by the distant transmitter.

34. Reception device according to Claim 33, characterised in that said means (86) for determining the change in the guard time determine the value of a first and a second bits (C, D) intended to be included in a marking signal by the local transmitter, said first and second bits forming a binary word indicating, according to its value, whether the value of said guard time must increase or decrease or take a predetermined maximum value or remain constant.

35. Reception device according to Claim 33 or 34, said transmitter using a redundancy coder, characterised in that it also has:
- synchronisation and correlation means (76, 74), for determining the start and end of each received symbol and for decoding, for each received symbol, the information carried by the marking signal coming from the distant transmitter, said synchronisation and correlation means correlating each received symbol with said marking signal, so as to obtain modulated blocks;
- transformation means (78), for multiplying each received modulated block by an invertible transformation matrix, so as to obtain a plurality of complex numbers representing respectively a plurality of points in a constellation;
- demapping means (80), for determining received data associated with said plurality of points in said constellation, so as to obtain encoded frames;
- means (82) for decoding encoded frames, for decoding said encoded frames by means of a decoder corresponding to the redundancy coder used by the transmitter;
- error detection means (84), for detecting, by means of an error detection code, possible errors in said decoded frames;
and in that it also has:
- noise measurement means (88), for measuring the power of the noise during the guard time between two successive symbols.

36. Reception device according to Claim 35, characterised in that said redundancy coder is a turbocoder, and in that said corresponding decoder is a turbodecoder.

37. Reception device according to Claim 35 or 36, characterised in that said invertible transformation implemented by said transformation means (78) is a Fourier transformation.

38. Reception device according to any one of Claims 33 to 37, said symbols having been modulated in a transposed band before transmission, characterised in that it also has demodulation means (72) for demodulating the received symbols.

39. Reception device according to any one of Claims 35 to 38, characterised in that said demapping means (80) use an alphabet and demodulation of the QAM or QPSK type.

40. Reception device according to any one of Claims 35 to 39, characterised in that said synchronisation and correlation means (76, 74) decode the information carried by each marking signal using the polarity of at least one correlation peak obtained by correlating each symbol received with said marking signal.

41. Reception device according to any one of Claims 33 to 40, characterised in that said marking signal includes at least one Barker sequence.

42. Reception device according to Claim 41, characterised in that said marking signal includes two Barker sequences in series, the first Barker sequence being multiplied by a first predetermined value (C) coded by said first bit, and the second Barker sequence being multiplied by a second predetermined value (D) coded by said second bit.

43. Digital signal processing apparatus, characterised in that it has means adapted to implement a transmission method according to any one of Claims 1 to 10.

44. Digital signal processing apparatus, characterised in that it has a transmission device according to any one of Claims 11 to 20.

45. Digital signal processing apparatus, characterised in that it has means adapted to implement a reception method according to any one of Claims 21 to 32.

46. Digital signal processing apparatus, characterised in that it has a reception device according to any one of Claims 33 to 42.

47. Telecommunication network, characterised in that it has means adapted to implement a transmission method according to any one of Claims 1 to 10.

48. Telecommunication network, characterised in that it has a transmission device according to any one of Claims 11 to 20.

49. Telecommunication network, characterised in that it has means adapted to implement a reception method according to any one of Claims 21 to 32.

50. Telecommunication network, characterised in that it has a reception device according to any one of Claims 33 to 42.

51. Mobile station in a telecommunication network, characterised in that it has means adapted to implement a transmission method according to any one of Claims 1 to 10.

52. Mobile station in a telecommunication network, characterised in that it has a transmission device according to any one of Claims 11 to 20.

53. Mobile station in a telecommunication network, characterised in that it has means adapted to implement a reception method according to any one of Claims 21 to 32.

54. Mobile station in a telecommunication network, characterised in that it has a reception device according to any one of Claims 33 to 42.

55. Information storage means which can be read by a computer or a microprocessor storing instructions of a computer program, characterised in that it makes it possible to implement a transmission method according to any one of Claims 1 to 10.

56. Information storage means which is removable, partially or totally, and can be read by a computer or microprocessor storing instructions of a computer program, characterised in that it makes it possible to implement a transmission method according to any one of Claims 1 to 10.

57. Information storage means which can be read by a computer or a microprocessor storing instructions of a computer program, characterised in that it makes it possible to implement a reception method according to any one of Claims 21 to 32.

58. Information storage means which is removable, partially or totally, and can be read by a computer or microprocessor storing instructions of a computer program, characterised in that it makes it possible to implement a reception method according to any one of Claims 21 to 32.

59. Computer program product, characterised in that it comprises software code portions for implementing a transmission method according to any one of Claims 1 to 10.

60. Computer program product, characterised in that it comprises software code portions for implementing a reception method according to any one of Claims 21 to 32.
